Europäisches Patentamt

(19) European Patent Office

Office européen des brevets

(11) Publication number: **0 225 107 B1**

# (12) EUROPEAN PATENT SPECIFICATION

(45) Date of publication of patent specification: **25.03.92**　(51) Int. Cl.⁵: **A62C 2/06**, F16L 5/02, H02G 3/22

(21) Application number: **86308973.6**

(22) Date of filing: **18.11.86**

---

(54) **Fire-retardant wall penetration for electrical cables.**

---

(30) Priority: **23.11.85 DE 3541442**

(43) Date of publication of application:
**10.06.87 Bulletin  87/24**

(45) Publication of the grant of the patent:
**25.03.92 Bulletin  92/13**

(84) Designated Contracting States:
**BE FR GB NL**

(56) References cited:
**DE-U- 8 230 678**
**GB-A- 2 077 382**
**GB-A- 2 108 614**
**US-A- 4 515 068**

(73) Proprietor: **MINNESOTA MINING AND MANU-
FACTURING COMPANY
3M Center, P.O. Box 33427
St. Paul, Minnesota 55133-3427(US)**

(72) Inventor: **Goebell, Jürgen c/o Minnesota Min-
ing
& Manufacturing C. 2501 Hudson Road P.O.
Box 33427
St. Paul, Minnesota 55133-3427(US)**

(74) Representative: **Baillie, Iain Cameron et al
c/o Ladas & Parry, Altheimer Eck 2
W-8000 München 2(DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a channel-like insert assembly for insertion in a wall to form a fire-retardant wall penetration for conduits, particularly electrical cables. Such a channel-like insert of metal, particularly sheet steel, can be inserted into the wall for receiving the conduits and a sealing material, preferably a material which is intumescent under the influence of a fire, which seals the conduits towards the insert.

In the case of a fire, fire-retardant wall penetrations for conduits should form, for a time as long as possible, an effective barrier against the passage of flames, hot and combustible gases, fire and smoke. Moreover, such wall penetrations should also form a reliable mechanical anchoring of high carrying capacity in the wall because it may happen in the case of a fire that other holding and supporting devices for the conduits become ineffective, and/or thermally caused deforming forces act upon the conduits and/or the insert.

GB-A-2,077,382 discloses a metal channel-like insert assembly for insertion in a wall to form a fire-resistant wall penetration for conduits, particularly electrical cables, said channel-like insert assembly being subdivided into at least two axial sections and being provided with protective material which will expand under the influence of a fire and will at least then be heat-insulating and form a barrier which seals the insert assembly outwardly towards such a wall. However it should be noted that the axial sections disclosed in GB-A-2,077,382, which are slidable in the axial direction, are preferably made of plastic.

The invention provides a metal channel-like insert assembly as disclosed in GB-A-2,077,382 characterised in that said axial sections are axially connected and are attached to each other at a connection area by a connection which is a bad heat conductor at least under the influence of a fire, said insert assembly being provided with sealing material which will expand under the influence of a fire to seal such conduits against the interior of the insert assembly.

According to another aspect of the invention, such a channel-like insert assembly is used to form a fire-retardant wall penetration for conduits.

In the insert assembly according to the invention, the high strength of the metal insert is combined with a very high thermal resistance in the axial direction and an additional sealing and mechanical anchoring in the wall penetration which becomes effective in the case of a fire by means of the intumescent protective material. Then, the intumescent protective material will also adapt itself to possible deformations of the insert assembly so that the insert will remain anchored in the wall with a high safety, even when subjected to increased loads, for instance due to destruction of holding devices for the conduits being in the fire area. Since the intumescent protective material is arranged at the metallic insert which has a good heat conductivity, the protective material will be rapidly heated, in the case of a fire, from the (hot) side of the wall penetration adjacent to the fire area, and will timely expand before major damage occurs on the cold side of the wall penetration. Usual intumescent materials will give off water upon expansion, whereby a desirable cooling action will be effected which will also contribute to a prolongation of the duration time of the wall penetration.

Particularly surprising is the high mechanical strength with which the insert assembly will be additionally anchored in the wall by expanded protective material.

Generally, the subdivision of the insert into only two sections will be sufficient. This is structurally simpler than a subdivision into more than two sections which, however, may be useful in special cases because then an even higher thermal resistance can be obtained between the hot and the cold side of the wall penetration.

Preferably, the protective material is arranged so that it will expand only into the outer environment of the insert. Then, a very small amount of protective material will be sufficient to obtain the desired effects. In special cases, however, it may also be appropriate to arrange the protective material so that it will expand into the outer environment and into the interior of the insert. This will result in the creation of an additional sealing within the interior of the insert.

Preferably, the protective material is provided only across a part of the length of the insert as measured in the axial direction in order that during normal operation, i.e. prior to the case of a fire, a heat exchange between the conduits and the wall is not impeded. For the same reason, it is appropriate to provide also the sealing material in the interior of the insert only across a part of the length of the insert as measured in the penetration direction.

It is particularly appropriate to arrange the protective material in the connection area. Then, in the case of a fire, the sealing and anchoring action of the intumescent protective material will be utilized by both connected sections of the insert.

A particularly simple and highly effective embodiment is characterized in that the sections of the insert are attached to each other with the interposition of the protective material. Thereby, the protective material simultaneously acts as a heat insulation between the sections and is arranged at the preferred location in the connection area. In this case, accommodation of the protective material can be obtained in a very simple manner in that in the connection area, the sections of the insert comprise edge portions which are opposed to each other with a mutual distance, the edge portions forming an accommodation space for the protective material and an exit gap for expanding protective material, the exit gap being arranged to obtain a desired expansion of the intumescent protective material. This manner of accommodating the protective material is structurally very simple and makes possible the function as heat insulation as well as, in the case of a fire, a restriction of the expansion of the protective material to certain areas, for instance into the space outside of the insert.

Appropriately, the insert comprises, in the connection area, outwardly projecting anchoring parts; thereby, a stronger anchoring in the wall can be effected. In doing so, it is advantageous if the anchoring parts are formed by the connection of the sections. An outwardly projecting connection facilitates the assembly and the arranging of the protective material in the connection area on the outside of the insert where the protective material shall preferably become effective. Particularly, the outwardly projecting anchoring parts can be formed by at least one of the edge portions of the insert sections. Then, additional structural parts are not required to form anchoring parts.

Protective material of the kind here described, which will expand under the influence of a fire, is commercially available as an easily deformable pre-product in the form of tapes, plates and strips. Mostly, this will involve a rubber-like plastic material which will evolve water vapor upon expansion. Particularly suitable is the material which is distributed by the applicant under the designation FS 195 AA.

The invention will be subsequently described in more detail by way of example only in connection with the drawing, in which:

Figure 1 is a diagrammatic perspective view of a wall penetration according to the invention, the largest portion of the wall being broken away.

Figure 2 is a diagrammatic sectional view along the line II-II of Figure 1.

Figure 3 is a diagrammatic vertical sectional view through another embodiment of a wall penetration according to the invention.

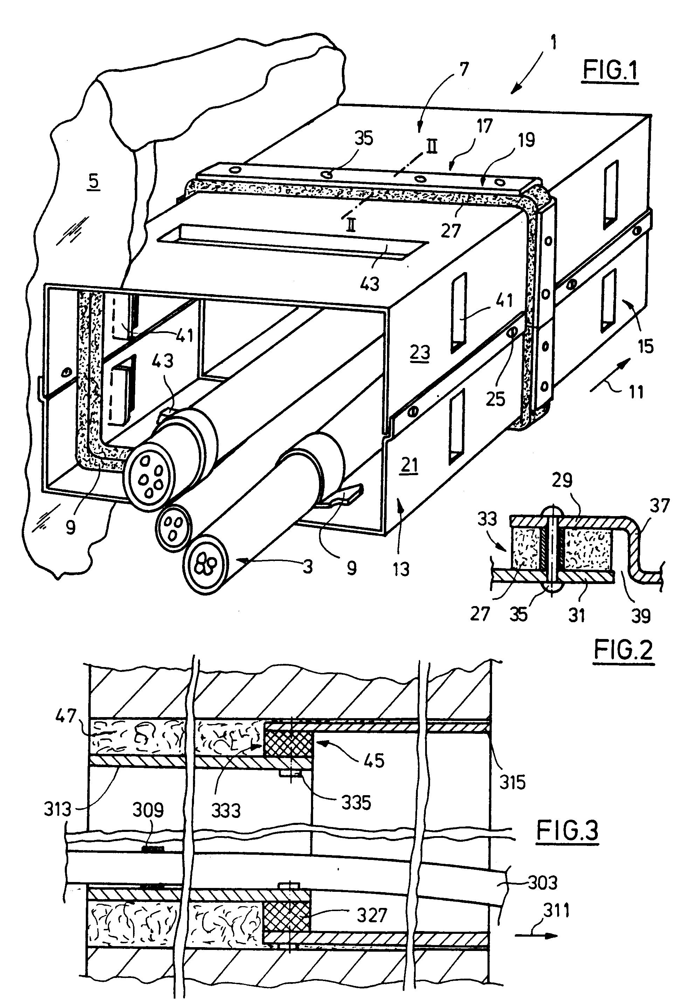

In Figure 3, parts which appear in corresponding form also in Figures 1 and 2, are designated with the same reference numerals as there, however, with the cipher 3 being prefixed. Insofar, reference is made, with respect to Figure 3, also to the description relating to Figures 1 and 2.

The drawings are purely diagrammatic and should not be understood as being to scale.

Figures 1 and 2 illustrate a fire-retardant wall penetration 1 for conduits 3 in a wall 5. As conduits, electrical cables are illustrated. For better clarity, only three conduits 3 are shown in Figure 1 in the interior space of the wall penetration 1 although normally, the interior space will be filled with conduits 3 as completely as possible.

The wall penetration comprises a channel-like insert 7 of metal which is inserted into an opening through the wall 5. The metal is selected with a view to strength and corrosion protection. Generally, corrosion-protected, e.g. galvanized, sheet steel is well suited. In the insert 7, a sealing material 9 is provided which seals the conduits 3 towards the insert in order to prevent a passage of flames, hot media or smoke in the case of a fire. In the embodiment illustrated, tape-shaped sealing material 9 is attached to the interior wall of the insert as well as laid around and between the conduits 3. The sealing material is provided only across a part of the total length of the wall penetration as measured in the penetration direction II in order to avoid the creation of unnecessary heat insulation between the conduits and the wall. The sealing material 9 is soft and can be easily pressed into possible interstices and depressions.

The insert 7 is subdivided into two sections 13, 15 arranged subsequently in the penetration direction 11. In a connection area 17, these sections are attached to each other in a connection 19 which is a bad heat conductor.

The sections 13 and 15 each comprise two parts of essentially U-shaped cross-section, e.g. the section 13 is formed of parts 21 and 23 which are put together with screws 25 or other fastening means. The parts of sections 13 and 15 can be stored and shipped with a smaller consumption of space than the finished box-shaped sections.

In the connection 19 of the sections 13 and 15, the heat insulation is effected in that the sections are attached to each other with the interposition of a protective material 27 which will expand under the influence of a fire. This arrangement offers the advantage that the protective material can be heated by each of the sections 13 and 15, depending on which side of the wall a fire will arise. Suitable intumescent materials which only have a small heat conductivity already in the non-intumescent state, are commercially available. Under the influence of a fire, the protective material 27 will expand very much, and this will result in a further large reduction of the heat conductivity. For the fire retarding action, it is important that the heat conductivity is small under the influence of a fire; therefore, basically materials will be sufficient which become heat-insulating only under the influence of a fire. Generally, however, the commercially available intumescent materials have a sufficiently low heat conductivity already in the non-expanded condition.

In the illustrated embodiment, the protective material 27 is arranged at the insert 7 so that under the influence of a fire, it will form a barrier which seals the insert 7 outwardly towards the wall 5. The expanding protective material will fill possible interstices which may result under the influence of a fire from deformation of the hot end of the insert 7 facing the fire, and will maintain a good sealing towards the wall for a very long time even under the influence of a fire. Even if the expanded protective material becomes charred, it remains coherent and essentially maintains its effectiveness as a barrier.

The illustrated arrangement of the protective material in the connection area 17 is appropriate because then, a sealing of both sections 13, 15 towards the wall 5 will be formed upon expansion.

The protective material 27 can be arranged so that it will expand essentially only into the outer environment of the insert 7. This will require less protective material than with the also possible arrangement of the protective material so that it will expand into the outer environment and into the interior of the insert. Also that last-mentioned embodiment can be advantageous, particularly if during normal operation, i.e. prior to the case of a fire, it is desirable to have only little sealing material in the interior of the insert in order to impede a necessary heat exchange with the conduits as little as possible. In the case of a fire, however, an improved heat insulation and sealing, which then will be highly desirable, will be obtained through the protective material which will then expand interiorly.

In order to keep the demand of protective material as low as possible, and to not unnecessarily impede a possibly necessary heat exchange during normal operation, i.e. prior to the case of a fire, it is appropriate to provide also the protective material 27, as in the case of the sealing material 9, only across a part of the length of the insert 7 as measured in the penetration direction 11.

In the illustrated embodiment, the sections 13, 15 of the insert 7 have, in the connection area 17, edge portions 29, 31 (Figure 2) which are opposed to each other with a mutual distance and form an accommodation space for the protective material 27 and an exit gap 33 for expanding protective material. The sections are interconnected in the edge portions by fastening means 35, e.g. rivets. In the illustrated embodiment, the fastening means extend through the interposed protective material 27. The fastening means are preferably designed as distance pieces, as illustrated in Figure 2, so that the connection 19 will maintain its strength also if the protective material 27 will expand and thereby undergo a loss in density. The number, material, and cross-section of the fastening means 35 can be readily selected so that the fastening means 35 form only an unimportant additional heat conduction path.

In the illustrated embodiment, the exit gap 33 is arranged so that the protective material 27 proceeds in a desirable direction upon expansion. In this sense, the exit gap 33 in the embodiment illustrated in Figures 1 and 2 is directed outwards. Interiorly, the accommodation space is limited by a web 37, save a heat insulation gap 39 between the edges of the sections 13 and 15. By this arrangement, expansion of the protective material 27 will occur predominantly outwardly into the connection area 17 and the environment thereof.

In the illustrated embodiment, the insert 7 has profiles, which can be designed to obtain a stiffening and/or an improvement of the anchoring of the insert 7 in the wall 5 and/or an improved anchoring of the conduits 3 in the insert 7. It is advantageous if in the connection area 17, the insert comprises outwardly projecting anchoring parts. Thereby, both sections 13 and 15 can be anchored simultaneously. In the embodiment illustrated, the connection 19 forms such anchoring parts. Particularly, it is simple if outwardly projecting anchoring parts are formed by at least one of the edge portions 29, 31. In the illustrated embodiment, this is the case with the edge portion 29.

Figure 3 illustrates an embodiment in which the second section 315 of the insert 307 has a larger cross-section than the first section 313, and thus an accommodation channel 333 for protective material 327 can be provided simply between non-bent edge portions 329, 331. Again, the sections 313, 315 are attached to each other with the interposition of the protective material 327 so that at least under the influence of a fire, if the protective material 327 increases its volume, a good heat insulation between the sections is obtained. As fasteners, again rivets 335 are provided which extend through the protective material 327.

In the embodiment according to Figure 3, the accommodation space for the protective material 327 is open to both sides in the penetration direction so that an interiorly directed second exit gap 45 is formed in addition to the outwardly directed exit gap 333 and thus, the protective material 327 will expand exteriorly and interiorly under the influence of a fire.

In the embodiment according to Figure 3, the wall opening destined to receive the insert 307 must have a cross-section which is sufficient to receive the larger section 315. If the wall opening has a unitary cross-section throughout, then a correspondingly increased amount of filling material 47 must be provided in the area of the smaller section 313.

In the embodiment according to Figure 3, a good anchoring is obtained particularly against loads acting in the direction opposite to the penetration direction 311. Moreover, the fastening means 335, e.g. rivets, form additional anchoring means, as in the embodiment according to Figure 1.

The mode of operation of the aforedescribed penetrations results readily from the foregoing description of their structure.

If, for instance, in the penetration according to Figure 1, a fire will arise in the space bordering the open end of the section 13, a temperature rise which will occur there will, due to the good heat conductivity of the metallic insert 7, rapidly propagate into the connection area 17. The protective material 27 which is provided there will receive a heat inflow of a magnitude that the protective material will soon and rapidly expand and form a secure seal towards the wall 5. Also further intumescent material which possibly is present in the forward section 13 will be caused to expand rapidly; thereby, for instance the interior of the insert 7 can be sealed reliably. The heat supply to the rear section 15, however, will be considerably slower, i.e. via the conduits 3 which are normally sheathed with plastic, and the badly heat-conducting connection 19, whereby the second section 15 will remain at a relatively low temperature. The expanding protective material 27 will furthermore form an additional anchoring of the insert 7 and also will adapt itself to possible deformations of the sections 13 and 15. It is advantageous to use a protective material which will upon its expansion evolve water and thereby exert a cooling effect. The protective material FS 195 AA of the applicant, which has been mentioned as an example, has such a property.

## Claims

1.  A metal channel-like insert assembly (7) for insertion in a wall (5) to form a fire-resistant wall penetration for conduits (3), particularly electrical cables, said channel-like insert assembly being subdivided into at least two axial sections (13, 15) and being provided with protective material (27) which will expand under the influence of a fire and will at least then be heat-insulating and form a barrier which seals the insert assembly outwardly towards such a wall, characterised in that said axial sections (13, 15) are axially connected and are attached to each other at a connection area by a connection (19) which is a bad heat conductor at least under the influence of a fire, said insert assembly (7) being provided with sealing material (9) which will expand under the influence of a fire to seal such conduits (3) against the interior of the insert assembly (7).

2.  An insert assembly (7) according to claim 1, wherein said protective material (27) is arranged so that it will expand essentially only into the outer environment of the insert assembly (7).

3.  An insert assembly (7) according to claim 1 or claim 2, wherein said protective material (27) is provided only across a part of the length of the insert assembly (7) as measured in the axial direction (11).

4.  An insert assembly (7) according to any preceding claim, wherein said sealing material (9) is provided only across a part of the length of the insert assembly (7) as measured in the axial direction.

5.  An insert assembly (7) according to any preceding claim, wherein said protective material (27) is disposed in the connection area (17).

6.  An insert assembly (7) according to any preceding claim, wherein said protective material (27) is interposed between the attached axial sections (13, 15).

7.  An insert assembly (7) according to claim 6, wherein at the connection area (17), the axial sections (13, 15) comprise edge portions (29, 31) which are opposed to each other and spaced apart to form a space for said protective material (27) and an exit gap (33) for expanding protective material (27), the exit gap (33) being arranged to propagate protective material (27) expanding under the influence of a fire.

8.  An insert assembly (7) according to any preceding claim, wherein at the connection area (17), the insert assembly (7) comprises outwardly projecting anchoring parts.

9.  An insert assembly (7) according to any preceding claim, wherein said protective material (27) evolves water upon expansion.

## Revendications

1.  Assemblage métallique (7) de pièce rapportée, en forme de canal, destiné à être introduit dans un mur (5) pour former un dispositif de passage, résistant au feu, pour des conduits (3) à travers ce mur, en particulier pour des câbles électriques, cet assemblage de pièce rapportée en forme de canal étant subdivisé en au moins deux sections axiales (13, 15) et comportant une matière protectrice (27) qui se dilatera sous l'influence d'un incendie et sera au moins alors un isolant thermique en formant une barrière qui assurera l'obturation de l'assemblage de pièce rapportée vers l'extérieur, en direction du mur susdit, caractérisé en ce que les sections axiales précitées (13, 15) sont reliées axialement et sont attachées l'une à l'autre dans une zone de connexion, par un dispositif de connexion (19) qui est mauvais conducteur de la chaleur au moins sous l'influence d'un incendie, cet assemblage de pièce rapportée (7) comportant une matière d'obturation hermétique (9) qui se dilatera sous l'influence d'un incendie pour assurer un scellage entre les conduits susdits (3) et la surface intérieure de l'assemblage de pièce rapportée (7).

2. Assemblage de pièce rapportée (7) suivant la revendication 1, caractérisé en ce que la matière protectrice (27) susdite est disposée de manière qu'elle ne se dilate essentiellement que dans l'environnement extérieur de cet assemblage de pièce rapportée (7).

3. Assemblage de pièce rapportée (7) suivant la revendication 1 ou la revendication 2, caractérisé en ce que la matière protectrice (27) susdite n'est prévue qu'en travers d'une partie de la longueur de cet assemblage de pièce rapportée (7), telle que mesurée dans la direction axiale (11).

4. Assemblage de pièce rapportée (7) suivant l'une quelconque des revendications précédentes, caractérisé en ce que la matière d'obturation hermétique susdite (9) n'est prévue qu'en travers d'une partie de la longueur de cet assemblage de pièce rapportée (7), telle que mesurée dans la direction axiale.

5. Assemblage de pièce rapportée (7) suivant l'une quelconque des revendications précédentes, caractérisé en ce que la matière protectrice (27) susdite est disposée dans la zone de connexion (17).

6. Assemblage de pièce rapportée (7) suivant l'une quelconque des revendications précédentes, caractérisé en ce que la matière protectrice (27) susdite est interposée entre les sections axiales attachées (13, 15).

7. Assemblage de pièce rapportée (7) suivant la revendication 6, caractérisé en ce que, dans la zone de connexion (17), les sections axiales (13, 15) comportent des parties marginales (29, 31) qui sont opposées l'une à l'autre et espacées pour créer un espace destiné à la matière protectrice (27) susdite et un intervalle de sortie (3) pour la matière protectrice (27) en cours de dilatation, l'intervalle de sortie (33) étant agencé de manière à propager la matière protectrice (27) en expansion sous l'influence d'un incendie.

8. Assemblage de pièce rapportée (7) suivant l'une quelconque des revendications précédentes, caractérisé en ce que, dans la zone de connexion (17), l'assemblage de pièce rapportée (7) comprend des parties d'ancrage, faisant saillie vers l'extérieur.

9. Assemblage de pièce rapportée (7) suivant l'une quelconque des revendications précédentes, caractérisé en ce que la matière protectrice (27) susdite dégage de l'eau lors de sa dilatation.

**Patentansprüche**

1. U-profilförmige Einsatzanordnung (7) aus Metall zum Einsetzen in eine Wand (5) unter Bildung einer feuerfesten Wanddurchführung für Leitungen (3), insbesondere elektrische Kabel, wobei die U-profilförmige Einsatzanordnung in mindestens zwei axiale Teile (13, 15) unterteilt und mit einem Schutzstoff (27) versehen ist, der sich unter dem Einfluß eines Brandes ausdehnt und wenigstens dann wärmeisolierend ist und eine Sperre bildet, die die Einsatzanordnung auswärts gegen eine solche Wand abdichtet, dadurch gekennzeichnet, daß die genannten axialen Teile (13, 15) in einem Verbindungsbereich axial miteinander verbunden und aneinander angebracht sind, und zwar durch eine Verbindung (19), die mindestens unter dem Einfluß eines Brandes ein schlechter Wärmeleiter ist, und daß die Einsatzanordnung (7) mit Dichtstoff (9) versehen ist, der sich unter dem Einfluß eines Brandes derart ausdehnt, daß er die geannten Leitungen (3) gegenüber dem Innern der Einsatzanordnung (7) abdichtet.

2. Einsatzanordnung (7) nach Anspruch 1, dadurch gekennzeichnet, daß der Schutzstoff (27) so angeordnet ist, daß er sich im wesentlichen nur in die Umgebung auf der Außenseite der Einsatzanordnung (7) ausdehnt.

3. Einsatzanordnung (7) nach Anspruch 1 oder Anspruch 2, dadurch gekennzeichnet, daß sich der Schutzstoff (27) nur über einen Teil der in der axialen Richtung (11) gemessenen Länge der Einsatzanordnung (7) erstreckt.

4. Einsatzanordnung (7) nach einem der vorhergehenden Ansprüche, dadurch gekennzeichnet, daß sich der Dichtstoff (9) nur über einen Teil der in der axialen Richtung (11) gemessenen Länge der Einsatzanordnung (7) erstreckt.

5. Einsatzanordnung (7) nach einem der vorhergehenden Ansprüche, dadurch gekennzeichnet, daß der Schutzwerkstoff (27) in dem Verbindungsbereich (17) angeordnet ist.

6. Einsatzanordnung (7) nach einem der vorhergehenden Ansprüche, dadurch gekennzeichnet, daß der Schutzwerkstoff (27) zwischen den aneinander angebrachten axialen Teilen (13, 15) angeordnet ist.

7. Einsatzanordnung nach Anspruch 6, dadurch gekennzeichnet, daß die axialen Teile (13, 15) an dem Verbindungsbereich (17) einander entgegengesetzt und im Abstand voneinander angeordnete Randteile (29, 31) besitzen, die einen Raum für den Schutzstoff (27) und einen Austrittsspalt (33) für sich ausdehnenden Schutzstoff (27) bilden, wobei der Austrittsspalt (33) so angeordnet ist, daß er eine Ausbreitung des sich unter dem Einfluß eines Brandes ausdehnenden Schutzstoffes (27) bewirkt.

8. Einsatzanordnung (7) nach einem der vorhergehenden Ansprüche, dadurch gekennzeichnet, daß die Einsatzanordnung (7) an dem Verbindungsbereich (17) auswärts vorspringende Verankerungsteile besitzt.

9. Einsatzanordnung (7) nach einem der vorhergehenden Ansprüche, dadurch gekennzeichnet, daß der Schutzstoff (27) Wasser abgibt, wenn er sich ausdehnt.

FIG.1

5

35  7  II  17  19

II

43  27

9  43  41

41

23

9  25  15

3  9  13  21  11

29

33  37

27  35  31  39

FIG.2

47

45

315

313  309  333  335

FIG.3

303

327  311

8